# EUROPEAN PATENT APPLICATION

(11) **EP 3 868 198 A1**
(43) Date of publication of application: **25.08.2021**
(21) Application number: 19907758.7
(22) Date of filing: 23.10.2019
(51) Int. Cl.: A01G 31/02

(54) **PLUG TRAY CAPABLE OF ADJUSTING DISTANCE BETWEEN PLANT ROOT SYSTEM AND NUTRIENT SOLUTION SURFACE, AND PLANTING PLATE**

(30) Priority: 04.01.2019 CN 201910007966
(71) Applicant: Fujian Sanan Sino-Science Photobiotech Co., Ltd., Quanzhou, Fujian 362411 (CN)
(72) Inventor: LI, Jing, Quanzhou, Fujian 362411 (CN); YAN, Wenkai, Quanzhou, Fujian 362411 (CN); ZHANG, Xiaoming, Quanzhou, Fujian 362411 (CN); GONG, Huaqin, Quanzhou, Fujian 362411 (CN); LI, Shaohua, Quanzhou, Fujian 362411 (CN)
(74) Representative: Petculescu, Ana-Maria
(86) International application number: PCT/CN2019/112734
(87) International publication number: WO 2020/140562

(57) **Abstract**

The present invention relates to the field of hydroponic devices for plants, and specifically relates to a hole plate rack capable of adjusting a distance between a plant root system and a nutrient solution level. Height adjustment structures are added on both sides of the hole plate rack to adjust the distance between a seedling root system and the nutrient solution level. The height adjustment structures are designed on both sides of the hole plate rack, and include grooves dug in both sides of the hole plate rack, and height cushion blocks. Inner walls of the grooves are provided with height cushion block separators. The height cushion blocks are rotatably connected into mounting holes in the inner walls of the grooves through plug pins, and are rotated to different positions to realize height adjustment. The present invention is simple and reasonable in structure, can guarantee nutrients required by seedlings at an incubation period and also ensure that the seedlings do not have root rot or algae growing in the seedling growing process, and can be widely applied to plant hydroponics.

## Description

### TECHNICAL FIELD

The present invention relates to the field of hydroponic devices for plants, and specifically relates to a structure capable of adjusting a distance between a plant root system and a nutrient solution level.

### BACKGROUND

During plant cultivation, a plant root system needs to be immersed in a nutrient solution to provide nutrients necessary for plant growth. The size and length of a root system of a plant in a plant factory will change with growth at different growth stages, such as a seedling stage, a low growth stage and a high growth stage, and the depth of a nutrient solution required is also different. For example, at the early stage of growth, a nutrient solution level must be close to a cultivation plate to ensure that young roots that have just sprung out can reach the nutrient solution; and at the later stage of growth, the nutrient solution must be far away from the cultivation plate to ensure that the root system can absorb enough water and an enough space is left for some of the roots to be exposed to oxygen to prevent root rot. Moreover, an extremely short distance or even contact will cause sponge blocks to absorb water and produce algae, and the stems of the plants will be wet for a long time, which can easily cause disease.

In the prior art, in order to solve the above-mentioned problems, adjusting the distance between the nutrient solution level and the cultivation plate by artificially increasing or decreasing the nutrient solution in each cultivation tank is time-consuming and laborious, and there is often a problem of inaccurate volume adjustment, which affects growth and regularity of the plant. Or, the plant or the cultivation plate is moved to other cultivation tanks to adjust the distance between the nutrient solution level and the cultivation plate, which will damage the plant root system in addition to being laborious.

### SUMMARY

In order to solve the above-mentioned technical problems and achieve different demands of a plant for a nutrient solution at different growth periods, it is necessary to provide a height-adjustable structure which can adjust changes in a distance between a plant root system and a nutrient solution level and guarantee demands of the plant for the nutrient solution at different periods and will not damage the plant root system. Furthermore, the height-adjustable structure can greatly reduce labors and time for water replacement or movement, and also reduce adverse effects caused by changes in concentration, pH and temperature of a root system nutrient solution on the plant, so that the production cost is reduced, and well growth of the plant is guaranteed.

In order to achieve the above objectives, the present invention provides a hole plate rack capable of adjusting a distance between a plant root system and a nutrient solution level, which specifically includes the following technical solution:
Height adjustment structures are arranged on a seedling hole plate rack, and include grooves dug in both sides of the hole plate rack, and height cushion blocks; the height cushion blocks are rotatably connected into the grooves; and the height cushion blocks are rotated in the grooves from a first position to a second position or from an nth position to an (n+1)th position, ..., an (n+i)th position to realize height adjustment, where n=1, i ∈ N⁺.

Preferably, the height adjustment structures are designed on both sides of the hole plate rack.

Preferably, height cushion block separators are arranged in the grooves, and are configured to control positions and angles of the height cushion blocks in a high mode.

Preferably, the height cushion block separators are arranged on inner walls of the grooves in a steplike manner, and are integrated with the grooves.

Preferably, the height cushion blocks have polygonal sections.

Preferably, the height cushion blocks have trapezoid sections; the first position is a horizontal position; and the second position is a vertical position. Or, the height cushion blocks have rectangular sections, hexagonal sections or other polygonal sections; and the nth position, the (n+1)th position, ..., and the (n+i)th position are all horizontal positions.

Preferably, each height cushion block has a trapezoid section: when the height cushion block is located at the horizontal position, upper and lower surfaces of the height cushion block are parallel, one side of the height cushion block away from the height cushion block separator is a right angle, one side of the height cushion block close to the height cushion block separator is a slope, and the bottom of the slope presses against the height cushion block separator; when the height cushion block is located at the vertical position, left and right surfaces of the height cushion block are parallel, one side of the height cushion block away from the height cushion block separator is a relatively large rectangular plane, one side of the height cushion block close to the height cushion block separator is a relatively small rectangular plane, and the relatively small rectangular plane presses against the height cushion block separator. Or, each height cushion block has a rectangular section: when the height cushion block is anticlockwise rotated to the first horizontal position, a short edge relatively close to a rotating shaft is located below, and a distance between the rotating shaft and the module is a at this time; when the height cushion block is located at the second horizontal position, a long edge relatively far from the rotating cushion block is located below, and the distance between the rotating shaft and the module is b at this time; and when the height cushion block is located at the third vertical position, a short edge relatively far from the rotating cushion block is located below, and the distance between the rotating shaft and the module is c. Or, each height cushion block has a hexagonal section: when the height cushion block is clockwise rotated to the first position, a long edge closest to the rotating shaft is located below, and the distance between the rotating shaft and the module is a at this time; when the height cushion block is located at the second position, a long edge relatively far from the rotating cushion block is located below, and the distance between the rotating shaft and the module is b at this time; and when the height cushion block is located at the third position, a long edge farthest from the rotating cushion block is located below, and the distance between the rotating shaft and the module is c at this time.

Preferably, each height cushion block has the rectangular or hexagonal section, and a relationship among a, b and c is c>b>a≥0.

Preferably, the height cushion blocks are embedded into mounting holes in the inner walls of the grooves through plug pins, and the mounting holes are circular holes.

The present invention further provides a planting plate, which includes an upper-layer hole plate, a sponge block, a nutrient solution and a module nutrient solution tank. The sponge block is arranged in the upper-layer hole plate; the upper-layer hole plate is arranged on the module nutrient solution tank containing the nutrient solution; the planting plate further includes any one of the hole plate racks described above, and the hole plate rack is arranged between the upper-layer hole plate and the module nutrient solution tank.

Compared with the prior art, the present invention has the following beneficial effects.
1. The arrangement of the height adjustment structures on both sides of the hole plate rack realizes adjustment for the height of a seedling hole plate without replacing hole plates with other heights, so that different demands of a plant for a nutrient solution at different periods are simply and quickly achieved, human resources are greatly reduced, and damage caused by movement to the plant is avoided.
2. The arrangement of the height cushion block separators is convenient for controlling the positions and the angles of the height cushion blocks and is more convenient for adjusting the distance between the plant root system and the nutrient solution level at a seedling stage, so that the demands of the plant for the nutrient solution at the early stage of seedling are guaranteed, and root rot and algae growing phenomena caused by the fact that the nutrient solution is too deep at the later stage of seedling are effectively prevented.

### BRIEF DESCRIPTION OF THE DRAWINGS

FIG. 1 is a diagram of a module seedling structure of the present embodiment;
FIG. 2 is a schematic structural diagram of a hole plate rack of the present embodiment;
FIG. 3 is a diagram of a height adjustment structure on both sides of the hole plate rack of the present embodiment;
FIG. 4 is a diagram of two height modes of a hole plate rack of the present embodiment 1 when a cushion block is a trapezoid platform;
FIG. 5 is a side view of a height mode at a first position of a hole plate rack of the present embodiment 1 when a cushion block is a trapezoid platform;
FIG. 6 is a side view of a height mode at a second position of a hole plate rack of the present embodiment 1 when a cushion block is a trapezoid platform;
FIG. 7 is a schematic structural diagram of a hole plate rack of the present embodiment 2 when a cushion block is a cuboid;
FIG. 8 is a side view of a first height mode of a hole plate rack of the present embodiment 2 when a cushion block is a cuboid;
FIG. 9 is a side view of a second height mode of a hole plate rack of the present embodiment 2 when a cushion block is a cuboid;
FIG. 10 is a schematic structural diagram of a cushion block of the present embodiment 2 when the cushion block is a cuboid;
FIG. 11 is a schematic structural diagram of a hole plate rack of the present embodiment 3 when a cushion block is a prismoid;
FIG. 12 is a side view of a first height mode of a hole plate rack of the present embodiment 3 when a cushion block is a prismoid;
FIG. 13 is a side view of a first height mode of a hole plate rack of the present embodiment 3 when a cushion block is a prismoid;
FIG. 14 is a schematic structural diagram of a cushion block of the present embodiment 3 when the cushion block is a prismoid;
FIG. 15 is a diagram of EC change of a nutrient solution under seedling of a traditional two-layer hole plate of a comparative example; and
FIG. 16 is a diagram of staged adjustment for EC of a nutrient solution after module seedling of the present embodiment.

### Descriptions of numerals in the drawings:

1: upper-layer hole plate; 2: hole plate rack; 3: sponge block; 4: nutrient solution; 5: module nutrient solution tank; 6: hole plate rack boundary beam; 7: mounting hole; 8: height cushion block separator; 9: height cushion block; and 10: groove.

### DETAILED DESCRIPTION OF THE EMBODIMENTS

In order to explain the technical contents, structural features, achieved objectives and effects of the technical solutions, a detailed description will be made below in combination with specific embodiments and accompanying drawings.

### Embodiment 1

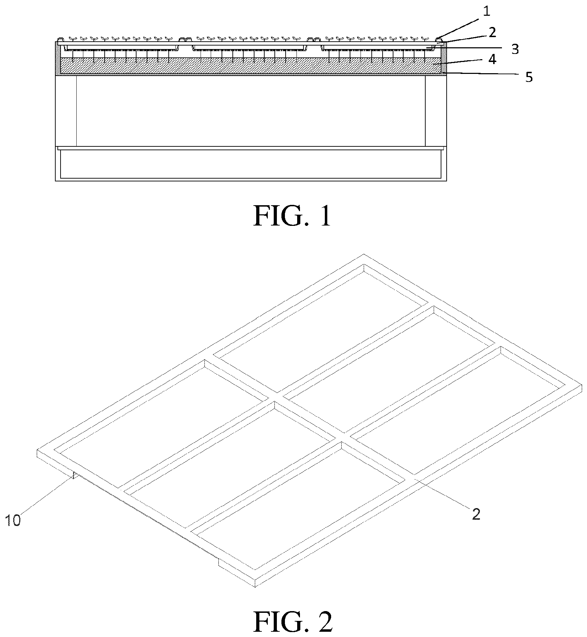

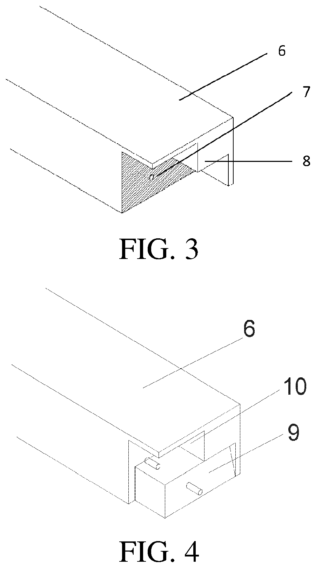

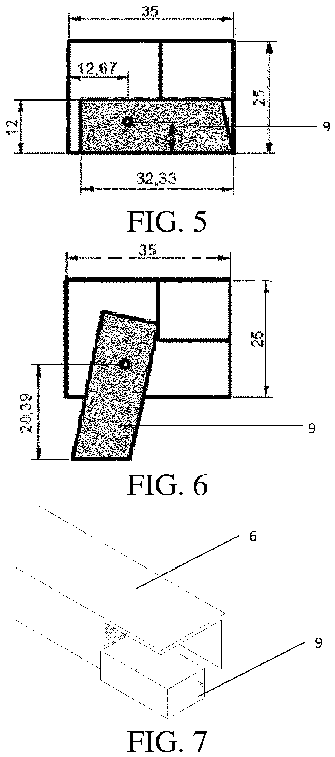

Referring to FIG. 1 to FIG. 6, the present embodiment is applied to the field of plant factory hydroponics or greenhouse hydroponics. A planting plate capable of adjusting a distance between a plant root system and a nutrient solution level includes an upper-layer hole plate 1, a nutrient solution tank 5, a sponge block 3, a nutrient solution 4 and a hole plat rack 2. The sponge block 3 is arranged in the upper-layer hole plate 1; the upper-layer hole plate 1 is arranged on the module nutrient solution tank 5 containing the nutrient solution; and the hole plate rack 2 is nested between the upper-layer hole plate 1 and the module nutrient solution tank 5. Height adjustment structures are arranged on the hole plate rack 2. The height adjustment structures are designed on both sides of the hole plate rack 2, and include grooves 10 dug in both sides of the hole plate rack 2, and height cushion blocks 9. Height cushion block separators 8 are arranged on inner walls of the grooves, and the height cushion block separators 8 are integrated with the grooves. The height cushion blocks 9 are rotatably connected into mounting holes 7 in the inner walls of the grooves through plug pins, and the height cushion blocks 9 are rotated in the grooves 10 from a horizontal position to a vertical position to realize height adjustment. If each height cushion block 9 has a trapezoid section, when the height cushion block 9 is located at the horizontal position, upper and lower surfaces of the height cushion block are parallel, one side of the height cushion block away from the height cushion block separator 8 is a right angle plane, one side of the height cushion block close to the height cushion block separator 8 is a slope, and the bottom of the slope presses against the height cushion block separator 8; and when the height cushion block 9 is located at the vertical position, left and right surfaces of the height cushion block are parallel, one side of the height cushion block away from the height cushion block separator 8 is a relatively large rectangular plane, one side of the height cushion block close to the height cushion block separator 8 is a relatively small rectangular plane, the relatively small rectangular plane presses against the height cushion block separator 8, and one side of the slope presses against the module nutrient solution tank 5. Therefore, it is convenient to adjust the height of the hole plate rack to adjust a depth of the plant root system immersed into the nutrient solution.

### Embodiment 2

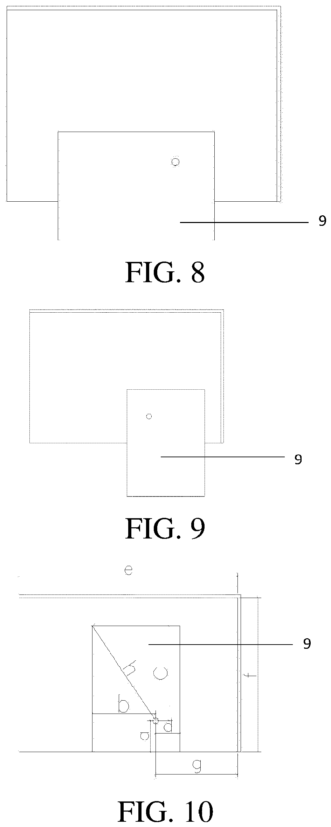

Referring to FIG. 1 to FIG. 3 and FIG. 7 to FIG. 10, the present embodiment is applied to the field of plant factory hydroponics or greenhouse hydroponics or plastic house hydroponics. A planting plate capable of adjusting a distance between a plant root system and a nutrient solution level includes an upper-layer hole plate 1, a nutrient solution tank 5, a sponge block 3, a nutrient solution 4 and a hole plat rack 2. The sponge block 3 is arranged in the upper-layer hole plate 1; the upper-layer hole plate 1 is arranged on the module nutrient solution tank 5 containing the nutrient solution; and the hole plate rack 2 is nested between the upper-layer hole plate 1 and the module nutrient solution tank 5. Height adjustment structures are added on the hole plate rack 2. The height adjustment structures are designed on both sides of the hole plate rack 2, and include grooves dug in both sides of the hole plate rack 2, and height cushion blocks 9. Height cushion block separators 8 are arranged on inner walls of the grooves, and the height cushion block separators 8 are integrated with the grooves. The height cushion blocks 9 are rotatably connected into mounting holes 7 in the inner walls of the grooves through plug pins, and the height cushion blocks 9 are anticlockwise rotated in the grooves from a first horizontal position to a third horizontal position to realize height adjustment. If each height cushion block 9 has a rectangular section, when the height cushion block 9 is located at the first horizontal position, a short edge relatively close to a rotating shaft is located below, and a distance between the rotating shaft and the module is a at this time; when the height cushion block is located at a second horizontal position, a long edge relatively far from the rotating cushion block is located below, and the distance between the rotating shaft and the module is b at this time; and when the height cushion block is located at the third horizontal position, a short edge relatively far from the rotating cushion block is located below, and the distance between the rotating shaft and the module is c at this time. a, b and c are set heights, c>b>a, a≥d≥0, g≥h, f-a≥h. In some other embodiments, the set heights a, b and c of the height cushion block satisfy the foregoing magnitude relational conditions. Therefore, the height of the hole plate rack 2 is adjusted in a diversified manner to adjust the depth between the plant root system and the nutrient solution.

### Embodiment 3

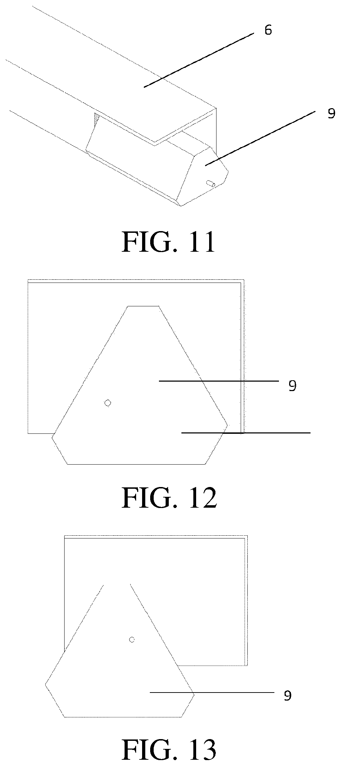

Referring to FIG. 1 to FIG. 3 and FIG. 11 to FIG. 14, the present embodiment is applied to the field of plant factory hydroponics or greenhouse hydroponics or plastic house hydroponics. A planting plate capable of adjusting a distance between a plant root system and a nutrient solution level includes an upper-layer hole plate 1, a nutrient solution tank 5, a sponge block 3, a nutrient solution 4 and a hole plat rack 2. The sponge block 3 is arranged in the upper-layer hole plate 1; the upper-layer hole plate 1 is arranged on the module nutrient solution tank 5 containing the nutrient solution; and the hole plate rack 2 is nested between the upper-layer hole plate 1 and the module nutrient solution tank 5. Height adjustment structures are added on the hole plate rack 2. The height adjustment structures are designed on both sides of the hole plate rack 2, and include grooves dug in both sides of the hole plate rack 2, and height cushion blocks 9. Height cushion block separators 8 are arranged on inner walls of the grooves, and the height cushion block separators 8 are integrated with the grooves. The height cushion blocks 9 are rotatably connected into mounting holes 7 in the inner walls of the grooves through plug pins, and the height cushion blocks 9 are clockwise rotated in the grooves from a first horizontal position to a third horizontal position to realize height adjustment. If each height cushion block 9 has a polygonal section, when the height cushion block is located at the first horizontal position, a long edge closest to a rotating shaft is located below, and a distance between the rotating shaft and the module is a at this time; when the height cushion block is located at a second horizontal position, a long edge relatively far from the rotating cushion block is located below, and the distance between the rotating shaft and the module is b at this time; and when the height cushion block is located at the third horizontal position, a short edge farthest from the rotating cushion block is located below, and the distance between the rotating shaft and the module is c at this time. a, b and c are set heights, c>b>a, g≥h, f-a≥h. In some other embodiments, the set heights a, b and c of the height cushion block satisfy the foregoing magnitude relational conditions. Therefore, the height of the hole plate rack is adjusted in a diversified manner to adjust the depth between the plant root system and the nutrient solution.

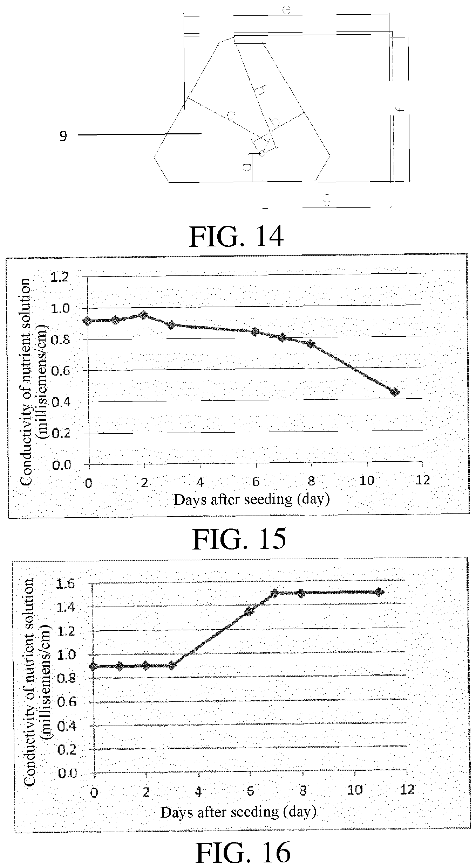

A traditional two-layer hole plate is used to culture seedlings, and variations of an EC value of the nutrient solution are as shown in FIG. 15. The planting plate having the structure of the present invention is used to culture the seedlings, and variations of an EC value of the nutrient solution are as shown in FIG. 16. It can be seen from the charts: by the use of the traditional two-layer hole plate in FIG. 15, EC of the nutrient solution at the later stage of seedling is only 50% of the initial value, which inhibits the growth of seedlings; when EC is increased to the initial value, EC greatly changes, and the root system environment is unstable and easily leads to bad characters such as leaves being yellow and spotted. The planting plate having the structure of the present invention for seedling in FIG. 16 provides an enough root system growth space and volume for the seedlings; the EC value of the nutrient solution is relatively stable and can realize staged adjustment; the qualification rate of seedling transplanting is increased by 17.6%, the length of the plant root system is increased by 47%, and the raw weight of the root system is increased by 24.2%; and the algae growing phenomenon on the surface of the planting plate is obviously reduced.

The present embodiment also takes white terrier planting as an example. The white terrier is planted by using fixed liquid levels, and by the hole plate rack and the plating plate capable of adjusting the distance between the plant root system and the nutrient solution level. The advantages and disadvantages of the two are compared, and specific comparison results are as shown in the following table:

| | Fixed liquid level planting | This patent (liquid level-adjustable planting) |
|---|---|---|
| Length of root system, cm | 4.3 | 6.7 |
| Survival rate, % | 83.5 | 94.8 |
| Average seedling days, d | 10.6 | 9.2 |
| Surface algae growing ratio, % | 7% | 1% |
| Harvesting yield, g/strain | 108.5 | 123.6 |

Through the explanation of the above-mentioned specific embodiments and final data of white terrier planting, it is shown that the present invention has the following beneficial effects: the height adjustment structures are added on both sides of the hole plate rack in the present invention to change the distance between the plant root system and the nutrient solution level; the planting plate having the structure of the present invention is used to culture the plant, so that it is ensured that the root system of a plant seedling at the early stage can fully touch the nutrient solution, and root rot and algae growing caused by the extremely deep nutrient solution at the later stage of seedling are avoided; healthier growth of the plant seedling is promoted; the qualification rate of plant seedling transplanting is increased; and the length and the raw weight of the plant root system are increased.

It should be noted that the relational terms herein such as first and second are used only to differentiate an entity or operation from another entity or operation, and do not require or imply any actual relationship or sequence between these entities or operations. Moreover, the terms "include," "comprise," and any variation thereof are intended to cover a non-exclusive inclusion. Therefore, in the context of a process, a method, an object, or a terminal device that includes a series of elements, the process, method, object, or device not only includes such elements, but also includes other elements not specified expressly, or may include inherent elements of the process, method, object, or terminal device. If there are no more restrictions, the elements defined by the sentence "including..." or "comprising..." do not exclude the existence of other elements in the process, method, article, or terminal device that includes the elements. In addition, in this text, "greater than", "less than", "exceeds" and the like are understood to not include this number; and "above", "below", "within" and the like are understood to include this number.

Although the foregoing embodiments have been described, those skilled in the art can make additional changes and modifications to these embodiments once they learn the basic creative concept. Therefore, the foregoing is only the embodiments of the present invention, and does not limit the scope of patent protection of the present invention. Any equivalent structure or equivalent process transformation made by using the content of the description and drawings of the present invention or directly or indirectly applied to other related technical fields shall all similarly fall within the scope of patent protection of the present invention.

## Claims

1. A hole plate rack capable of adjusting a distance between a plant root system and a nutrient solution level, wherein height adjustment structures are arranged on the seedling hole plate rack, and comprise grooves arranged in both sides of the seedling hole plate rack, and height adjustment cushion blocks; the height adjustment cushion blocks are rotatably connected into the grooves; and the height cushion blocks are rotated in the grooves from a first position to a second position or from an nth position to an (n+1)th position, ..., an (n+i)th position to realize height adjustment, wherein n=1, i ∈ N⁺.

2. The hole plate rack according to claim 1, wherein the height adjustment structures are designed on both sides of the hole plate rack.

3. The hole plate rack according to claim 1, wherein height cushion block separators are arranged in the grooves.

4. The hole plate rack according to claim 3, wherein the height cushion block separators are arranged on inner walls of the grooves, and are integrated with the grooves.

5. The hole plate rack according to claim 1, wherein the height cushion blocks have polygonal sections.

6. The hole plate rack according to claim 5, wherein the height cushion blocks have trapezoid sections, the first position is a horizontal position, and the second position is a vertical position; or, the height cushion blocks have rectangular sections, hexagonal sections or other polygonal sections, and the nth position, the (n+1)th position, ..., and the (n+i)th position are all horizontal positions.

7. The hole plate rack according to claim 5, wherein each height cushion block has a trapezoid section: when the height cushion block is located at the horizontal position, upper and lower surfaces of the height cushion block are parallel, one side of the height cushion block away from the height cushion block separator is a right angle, one side of the height cushion block close to the height cushion block separator is a slope, and the bottom of the slope presses against the height cushion block separator; when the height cushion block is located at the vertical position, left and right surfaces of the height cushion block are parallel; or, each height cushion block has a rectangular section: when the height cushion block is anticlockwise rotated to the first horizontal position, a short edge relatively close to a rotating shaft is located below, and a distance between the rotating shaft and the module is a at this time; when the height cushion block is located at the second horizontal position, a long edge relatively far from the rotating cushion block is located below, and the distance between the rotating shaft and the module is b at this time; and when the height cushion block is located at the third vertical position, a short edge relatively far from the rotating cushion block is located below, and the distance between the rotating shaft and the module is c at this time; or, each height cushion block has a hexagonal section: when the height cushion block is clockwise rotated to the first position, a long edge closest to the rotating shaft is located below, and the distance between the rotating shaft and the module is a at this time; when the height cushion block is located at the second position, a long edge relatively far from the rotating cushion block is located below, and the distance between the rotating shaft and the module is b at this time; and when the height cushion block is located at the third position, a long edge farthest from the rotating cushion block is located below, and the distance between the rotating shaft and the module is c at this time.

8. The hole plate rack according to claim 7, wherein each height cushion block has the rectangular or hexagonal section, and a relationship among a, b and c is c>b>a≥0.

9. The hole plate rack according to claim 1, wherein the height cushion blocks are embedded into mounting holes in inner walls of the grooves through plug pins fixed on the height cushion blocks, and the mounting holes are circular holes.

10. A planting plate, comprising an upper-layer hole plate, a sponge block and a nutrient solution tank, wherein the sponge block is arranged in the upper-layer hole plate; the upper-layer hole plate is arranged on the nutrient solution tank containing a nutrient solution; the planting plate further comprises the hole plate rack according to any one of claims 1 to 9; and the hole plate rack is arranged between the upper-layer hole plate and a module nutrient solution tank.
